# EUROPÄISCHE PATENTSCHRIFT

(11) **EP 2 991 837 B1**
(45) Veröffentlichungstag und Bekanntmachung des Hinweises auf die Patenterteilung: **17.02.2021**
(21) Anmeldenummer: 14721763.2
(22) Anmeldetag: 28.04.2014
(51) Int. Cl.: B42D 25/324, B42D 25/342, B42D 25/346, B42D 25/373, B42D 25/41, B42D 25/435, B42D 25/425, B42D 25/43

(54) **OPTISCH VARIABLES SICHERHEITSELEMENT**
OPTICALLY VARIABLE SECURITY ELEMENT
ÉLÉMENT DE SÉCURITÉ OPTIQUEMENT VARIABLE

(30) Priorität: 29.04.2013 DE 102013007484
(43) Veröffentlichungstag der Anmeldung: 09.03.2016
(73) Patentinhaber: Giesecke+Devrient Currency Technology GmbH, 81677 München (DE)
(72) Erfinder: GREGAREK, André, 81671 München (DE); RAHM, Michael, 83646 Bad Tölz (DE); SCHINABECK, Josef, 83703 Gmund (DE); HOFFMÜLLER, Winfried, 83646 Bad Tölz (DE)
(86) Internationale Anmeldenummer: PCT/EP2014/001129
(87) Internationale Veröffentlichungsnummer: WO 2014/177267

(56) Entgegenhaltungen:
- EP-A2- 1 747 905
- WO-A1-2010/115235
- DE-A1-102006 005 000

## Beschreibung

Die Erfindung betrifft ein optisch variables Sicherheitselement für Sicherheitspapiere, Wertdokumente und andere Datenträger, ein Verfahren zur Herstellung eines solchen Sicherheitselements, sowie einen Datenträger mit einem solchen Sicherheitselement.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes graphisches Motiv zeigen.

Beispielsweise werden Ausweiskarten, wie etwa Kreditkarten oder Personalausweise seit langem mittels Lasergravur personalisiert. Bei der Personalisierung durch Lasergravur werden die optischen Eigenschaften des Substratmaterials durch geeignete Führung eines Laserstrahls in Gestalt einer gewünschten Kennzeichnung irreversibel verändert. Eine solche Lasermarkierung ermöglicht es, die Individualisierung der Datenträger mit Sicherheitselementen zu verbinden und sie freier ins Druckbild zu integrieren als bei herkömmlichen Individualisierungen, etwa bei bekannten Zifferungsverfahren.

Die Druckschrift EP 0 219 012 A1 beschreibt eine Ausweiskarte mit einer partiellen Linsenrasterstruktur. Durch diese Linsenstruktur werden mit einem Laser unter verschiedenen Winkeln Informationen in die Karte eingeschrieben. Diese Informationen können anschließend auch nur unter diesem Winkel erkannt werden, so dass beim Kippen der Karte die unterschiedlichen Informationen erscheinen.

Aus der Druckschrift DE 10 2006 005 000 A1 ist ein Mehrschichtkörper zur Durchlicht-Betrachtung von Vorder- und Rückseite bekannt. Der Mehrschichtkörper besteht aus einer oder mehreren transparenten ersten Schichten und einer zweiten Schicht mit einem Mikromuster aus opaken ersten Teilbereichen und transparenten zweiten Teilbereichen. Eine der ersten Schichten weist auf ihrer der zweiten Schicht abgewandten Oberfläche eine Anordnung einer Vielzahl von Mikrolinsen auf.

Die Druckschrift EP 1 747 905 A2 befasst sich mit einem Verfahren zur Herstellung eines Sicherheitselements, das eine Trägerfolie mit einer Deckschicht enthält, welche insbesondere im Durchlicht erkennbare beschichtungsfreie Bereiche in Form von Mustern, Zeichen oder Codierungen aufweist. Das Verfahren umfasst das Aufbringen einer Maske, die die Gestalt der beschichtungsfreien Bereiche definiert.

Ausgehend davon liegt der Erfindung die Aufgabe zugrunde, ein Sicherheitselement der eingangs genannten Art mit einem attraktiven visuellen Erscheinungsbild und hoher Fälschungssicherheit anzugeben.

Diese Aufgabe wird durch die Merkmale der unabhängigen Ansprüche gelöst. Weiterbildungen der Erfindung sind Gegenstand der Unteransprüche.

Gemäß Anspruch 1 der Erfindung umfasst ein gattungsgemäßes Sicherheitselement
- einen ein- oder mehrschichtigen Zentralkörper mit gegenüberliegenden ersten und zweiten Hauptflächen,
- eine auf der ersten Hauptfläche des Zentralkörpers angeordnete Anordnung aus gleichartigen Mikrolinsen, deren brechende Wirkung eine Fokusebene definiert,
- eine auf der zweiten Hauptfläche des Zentralkörpers angeordnete lasersensitive Aufzeichnungsschicht,
- eine Maskenschicht, die zwischen der Anordnung aus Mikrolinsen und der lasersensitiven Aufzeichnungsschicht und außerhalb der Fokusebene der Mikrolinsen angeordnet ist, und
- eine Vielzahl von in der lasersensitiven Aufzeichnungsschicht durch Einwirkung von Laserstrahlung erzeugten Mikrokennzeichen, wobei jedes Mikrokennzeichen einer Mikrolinse zugeordnet ist und bei der Betrachtung des Sicherheitselements durch die zugeordnete Mikrolinse sichtbar ist,
- wobei die Maskenschicht einen makroskopischen Aussparungsbereich aufweist, der im Passer zu der Vielzahl von Mikrokennzeichen steht.

Als Mikrolinsen werden Linsen bezeichnet, deren Größe unterhalb der Auflösungsgrenze des bloßen Auges liegt. Die Mikrolinsen sind vorzugsweise sphärisch oder asphärisch ausgebildet und weisen beispielsweise bei Banknoten mit Vorteil einen Durchmesser zwischen 5 µm und 100 µm, vorzugsweise zwischen 10 µm und 50 µm, besonders bevorzugt zwischen 15 µm und 20 µm auf. Bei Kartenanwendungen können die Mikrolinsen auch größer sein und beispielsweise einen Durchmesser zwischen 100 µm und 300 µm aufweisen. In allen Gestaltungen können die Mikrolinsen auch als Zylinderlinsen ausgebildet sein. Die Krümmung der Mikrolinsen definiert zumindest eine Fokuslänge (Brennweite) für jede Linse. Dabei weisen die Mikrolinsen der Mikrolinsenanordnung alle dieselbe Fokuslänge auf und sind daher im Sinn der vorliegenden Beschreibung "gleichartig". Durch die gleiche Fokuslänge ist sichergestellt, dass die Mikrolinsen zusammen eine gemeinsame Fokusebene definieren.

In manchen Ausgestaltungen können neben der genannten Anordnung gleichartiger Mikrolinsen auch weitere Mikrolinsenanordnungen mit anderen Brennweiten vorgesehen sein.

Als makroskopischer Aussparungsbereich wird ein Aussparungsbereich bezeichnet, der aus einem Betrachtungsabstand von 20 cm mit bloßem Auge erkennbar ist. Vorzugsweise weist der makroskopische Aussparungsbereich in jeder Richtung eine Abmessung zwischen 0,5 mm und 3 cm auf. Weiter bildet der makroskopische Aussparungsbereich in allen Ausgestaltungen mit Vorteil ein Motiv in Form von Mustern, Zeichen oder einer Codierung.

Die Angabe, dass der makroskopische Aussparungsbereich im Passer zu der Vielzahl von Mikrokennzeichen steht, bedeutet, dass der Aussparungsbereich und ein die Vielzahl von Mikrokennzeichen eng umschließender Kennzeichnungsbereich aus einem normalen Betrachtungsabstand von 20 bis 30 cm deckungsgleich erscheinen. Die Lage des Kennzeichnungsbereichs bzw. der Mikrokennzeichen in der Ebene der Aufzeichnungsschicht kann dabei von der Lage des Aussparungsbereichs in der Ebene der Maskenschicht je nach der Richtung der Laserbeaufschlagung um ein Mehrfaches des Mikrolinsen-Durchmessers abweichen. Besonders bevorzugt weicht die Lage des Kennzeichnungsbereichs bzw. der Mikrokennzeichen in der Ebene der Aufzeichnungsschicht höchstens um einen halben Mikrolinsen-Durchmesser von der Lage des Aussparungsbereichs in der Ebene der Maskenschicht ab.

Der Zentralkörper kann einschichtig ausgebildet sein und beispielsweise durch eine Folie gebildet sein, er kann aber auch mehrschichtig aufgebaut sein und mehrere Folien und/oder Zwischenschichten, wie etwa Kaschierlackschichten umfassen. Der Zentralkörper kann, muss aber nicht ein tragendes Substrat des Sicherheitselements darstellen.

In einer vorteilhaften Erfindungsvariante ist die Maskenschicht eine lasersensitive Maskenschicht, bei der der Aussparungsbereich durch Einwirkung von Laserstrahlung erzeugt ist. Dabei sind der Aussparungsbereich der Maskenschicht und die Mikrokennzeichen der Aufzeichnungsschicht mit Vorteil im selben Arbeitsgang durch denselben Laserstrahl erzeugt, um die Passerhaltigkeit von Aussparungsbereich und Mikrokennzeichen sicherzustellen.

In einer anderen, ebenfalls vorteilhaften Erfindungsvariante ist die Maskenschicht eine laserabsorbierende oder laserreflektierende Maskenschicht, die vorzugsweise eine Druckschicht darstellt. Mit Vorteil ist die Maskenschicht in dieser Variante selbst nicht lasersensitiv und wird bei der Laserbeaufschlagung zur Erzeugung der Mikrokennzeichen von der Laserstrahlung nicht verändert.

Die Maskenschicht kann insbesondere auf der ersten Hauptfläche des Zentralkörpers zwischen dem Zentralkörper und der Anordnung aus Mikrolinsen angeordnet sein. Der Zentralkörper kann in diesem Fall ein- oder mehrschichtig sein. Alternativ kann der Zentralköper aus zwei oder mehr Teilschichten bestehen und die Maskenschicht kann zwischen zwei Teilschichten des Zentralkörpers angeordnet sein.

In einer vorteilhaften Ausgestaltung erstreckt sich der Aussparungsbereich der Maskenschicht durchgehend über mehrere Mikrolinsen, bevorzugt über mehrere hundert Mikrolinsen, besonders bevorzugt über mehrere tausend Mikrolinsen.

Bei einer anderen, ebenfalls vorteilhaften Ausgestaltung erstreckt sich der Aussparungsbereich der Maskenschicht über mehrere Mikrolinsen, bevorzugt über mehrere hundert Mikrolinsen, besonders bevorzugt über mehrere tausend Mikrolinsen, wobei zwischen benachbarten Mikrolinsen Maskenstege vorliegen, deren Abmessungen unterhalb der Auflösungsgrenze des menschlichen Auges liegen. Insbesondere liegt die Breite der Maskenstege zwischen den Mikrolinsen unterhalb von 15 µm, vorzugsweise unterhalb von 10 µm oder sogar unterhalb von 5 µm.

Der Abstand benachbarter Mikrokennzeichen ist zweckmäßig gleich dem Abstand der den benachbarten Mikrokennzeichen zugeordneten Mikrolinsen.

Der Abstand der Fokusebene von der Mikrolinsenebene definiert eine Fokuslänge, nämlich die Fokuslänge der einzelnen, gleichartigen Mikrolinsen. Der Abstand der Maskenschicht von der Fokusebene kann zwischen 40% und 100% der Fokuslänge liegen. Mit Vorteil beträgt der Abstand der Maskenschicht von der Fokusebene mehr als 80%, bevorzugt mehr als 90% der Fokuslänge.

Gemäß einer Weiterbildung der Erfindung enthält das Sicherheitselement ablationsfördernde Strukturen, die bei der Laserbeaufschlagung die Erzeugung des Aussparungsbereichs in der Maskenschicht erleichtern. Insbesondere kann die Maskenschicht hierzu eine oberflächenvergrößernde Reliefstruktur aufweisen, beispielsweise eine oberflächenvergrößernde Reliefstruktur mit einer gekreuzten sinusförmigen Oberflächentopographie. Die Oberflächentopographie kann dabei beispielsweise eine Höhe von 200 bis 400 nm, vorzugsweise von etwa 300 nm, und in x- und y-Richtung jeweils eine Gitterkonstante von 200 bis 400 nm, vorzugsweise von etwa 300 nm, aufweisen.

In einer bevorzugten Ausgestaltung ist die erste Hauptfläche des Zentralkörpers nur in dem Aussparungsbereich mit der oberflächenvergrößernden Reliefstruktur versehen.

Weitere Möglichkeiten der selektiven Entfernung von Metallschichten mittels Laserstrahlung sind in der Druckschrift WO 2011/038848 A2 insbesondere auf den Seiten 26 bis 32 beschrieben, deren Offenbarung insoweit in die vorliegende Beschreibung aufgenommen wird. Bezogen auf die vorliegende Erfindung wird dabei die Aufzeichnungsschicht jeweils so ausgestaltet, dass sie eine höhere Laserenergie für die Demetallisierung erfordert, und die Maskenschicht so, dass eine geringere Laserenergie für die Demetallisierung ausreicht. Dadurch kann erreicht werden, dass bei einer Laserenergie, die Mikrokennzeichen der gewünschten Größe in der Aufzeichnungsschicht erzeugt, der Aussparungsbereich der leichter zu ablatierenden Maskenschicht weitgehend oder vollständig ohne Maskenstege erzeugt wird. Auf diese Weise kann eine möglichst vollständige Ablation der Maskenschicht in den Aussparungsbereichen bei gleichzeitiger kontrollierter Erzeugung von Mikrokennzeichen gewünschter Größe in der Aufzeichnungsschicht erreicht werden.

Gemäß einer weiteren erfindungsgemäßen Ausgestaltung ist zwischen der Maskenschicht und der Aufzeichnungsschicht eine Laserabsorptionsschicht angeordnet. Die Laserabsorptionsschicht weist vorzugsweise im sichtbaren Spektralbereich eine Transmission von mehr als 90% oder sogar von mehr als 95% auf, und/oder weist vorzugsweise im infraroten Spektralbereich eine Absorption von mehr als 20% oder sogar von mehr als 30% auf.

Die Laserbeaufschlagung zur Erzeugung des Aussparungsbereichs in der Maskenschicht und der Mikrokennzeichen in der Aufzeichnungsschicht erfolgt vorzugsweise mit einem Infrarotlaser, beispielsweise bei einer Wellenlänge von 1,064 µm. Durch die Laserabsorptionsschicht wird ein Teil der einfallenden Laserenergie absorbiert, so dass zwar die Maskenschicht mit der vollen Laserenergie, die Aufzeichnungsschicht jedoch nur mit reduzierter Laserenergie beaufschlagt wird. Dadurch kann die Laserbeaufschlagung mit einer Laserenergie erfolgen, die ausreicht um die Maskenschicht auch in den Bereichen zwischen den Mikrolinsen abzutragen, ohne dabei zu große Mikrokennzeichen in der Aufzeichnungsschicht zu erzeugen oder die Aufzeichnungsschicht vollständig abzutragen.

Das Vorsehen einer Laserabsorptionsschicht kann auch mit den oben genannten ablationsfördernden Maßnahmen für die Maskenschicht kombiniert werden, um eine vollständige Ablation der Maskenschicht in dem Aussparungsbereich bei gleichzeitiger kontrollierter Erzeugung von Mikrokennzeichen gewünschter Größe in der Aufzeichnungsschicht sicherzustellen.

In einer bevorzugten Ausgestaltung sind die Mikrokennzeichen durch Mikrolöcher in der Aufzeichnungsschicht gebildet, insbesondere durch im Wesentlichen kreisförmige Mikrolöcher oder durch musterförmige Mikrolöcher. Die genaue Form der Mikrokennzeichen bzw. Mikrolöcher hängt insbesondere von der Form der Mikrolinsen (sphärisch, asphärisch, zylinderförmig) ab und, wie weiter unten beschrieben, auch vom Einfallswinkel der Laserstrahlung.

In anderen Ausgestaltungen können die Mikrokennzeichen anstelle von Mikrolöchern in der Aufzeichnungsschicht auch in geschwärzten oder nichtgeschwärzten Änderungen des visuellen Erscheinungsbildes der Aufzeichnungsschicht bestehen. Allgemein können die Mikrokennzeichen durch eine Farbänderung oder Entfernung der lasersensitiven Aufzeichnungsschicht gebildet sein. Die Entfernung der lasersensitiven Aufzeichnungsschicht schließt auch eine nur teilweise Entfernung ein, die optisch einer Aufhellung entspricht. Die Farbänderung oder Entfernung der Aufzeichnungsschicht kann auf thermischen, photochemischen oder gemischten Prozessen beruhen. Um Durchlichteffekte zu erzeugen, weisen die Mikrokennzeichen eine verringerte Opazität auf und sind im Extremfall durch die genannten Mikrolöcher gebildet. Für Auflichteffekte ist eine verringerte Opazität nicht zwingend erforderlich, dort kann die Änderung beispielsweise auch in einer Schwärzung bestehen.

In einer vorteilhaften Ausgestaltung sind die Mikrokennzeichen jeweils kleiner als die zugeordneten Mikrolinsen. Dabei kann das Flächenverhältnis von Mikrokennzeichen und zugeordneter Mikrolinse unterhalb von 1,0 oder unterhalb von 0,5, unterhalb von 0,2, oder sogar unterhalb von 0,1 liegen. Kreisförmige Mikrolöcher können beispielsweise einen Durchmesser zwischen 1 µm und 15 µm, zwischen 1,5 µm und 5 µm, und insbesondere zwischen 2 µm und 3 µm aufweisen.

Mit besonderem Vorteil ist das Sicherheitselement im Aussparungsbereich der Maskenschicht und den im Passer dazu angeordneten Mikrokennzeichen semitransparent, insbesondere mit einer Lichtdurchlässigkeit zwischen 20% und 90%. Die Lichtdurchlässigkeit des Sicherheitselements ist in jedem Fall im Aussparungsbereich signifikant, beispielsweise um mehr als einen Faktor 1,5 oder um mehr als einen Faktor 2 höher als außerhalb des Aussparungsbereichs der Maskenschicht. In den letztgenannten Bereichen ist das Sicherheitselement typischerweise opak oder weist eine Lichtdurchlässigkeit von weniger als 15%, insbesondere von weniger als 10% auf. Dadurch ergibt sich ein auffälliger Durchsichtseffekt, wie weiter unten genauer beschrieben.

Die Mikrokennzeichen sind in manchen Ausgestaltungen aus zumindest zwei unterschiedlichen Richtungen mit Laserstrahlung durch die Mikrolinsenanordnung hindurch in die Aufzeichnungsschicht eingebracht. Bei der späteren Betrachtung sind die Mikrokennzeichen dann jeweils im Wesentlichen aus den Betrachtungsrichtungen erkennbar, unter denen sie bei der Erzeugung eingebracht wurden. Entsprechend sind die Mikrokennzeichen bei diesen Ausgestaltungen aus zumindest zwei unterschiedlichen Betrachtungsrichtungen erkennbar, so dass Kipp- oder Wechselbilder erzeugt werden können. Die aus unterschiedlichen Betrachtungsrichtungen sichtbaren Motive können in einem Sinnzusammenhang stehen und beispielsweise wie bei einem Daumenkino eine Bildfolge darstellen, die beim Kippen des Sicherheitselements vor dem Auge des Betrachters abläuft.

Bei vorteilhaften Ausgestaltungen der Erfindung enthält das Sicherheitselement zugleich eine mikrooptische Darstellungsanordnung, insbesondere eine Moire-Vergrößerungsanordnung, eine mikrooptische Vergrößerungsanordnung vom Moiretyp oder eine Modulo-Vergrößerungsanordnung. Das Grundprinzip solcher mikrooptischer Darstellungsanordnungen ist in der Druckschrift WO 2009/000528 A1 erläutert, deren Offenbarung insoweit in die vorliegende Beschreibung aufgenommen wird. Bevorzugt enthält die Aufzeichnungsschicht in diesem Fall neben den Mikrokennzeichen ein Motivbild, das in eine Mehrzahl von Zellen eingeteilt ist, in denen jeweils abgebildete Bereiche eines vorbestimmten weiteren Motivs angeordnet sind, wobei die Mikrolinsenanordnung ein Mikrolinsenraster bildet, das bei Betrachtung des Motivbilds das weitere Motiv aus den in den Zellen angeordneten abgebildeten Bereichen rekonstruiert.

In einer bevorzugten Erfindungsvariante sind die Aufzeichnungsschicht, die Maskenschicht oder beide Schichten opak. Insbesondere kann die Aufzeichnungsschicht und/oder die Maskenschicht durch eine opake Metallschicht gebildet sein oder eine opake Metallschicht enthalten. Der Begriff Metall schließt dabei auch Metall-Legierungen ein. Als opake Metallschichten kommen beispielsweise Schichten aus Aluminium, Kupfer, Chrom, Silber, Gold oder einer Al-Cu-Legierung in Betracht. In machen Gestaltungen soll ein Farbkontrast zwischen der Maskenschicht und der Aufzeichnungsschicht vorliegen. In diesem Fall wird beispielsweise Aluminium als Material für die Maskenschicht und Kupfer als Material für die Aufzeichnungsschicht gewählt. In anderen Gestaltungen sollen die Maskenschicht und die Aufzeichnungsschicht farbgleich erscheinen. In diesem Fall wird für beide Schichten dasselbe Material oder werden farbähnliche Materialien gewählt.

Neben Metallschichten kommen für die Maskenschicht und die Aufzeichnungsschicht auch Dünnschichtelemente mit Farbkippeffekt in Betracht, die der Maskenschicht bzw. der Aufzeichnungsschicht selbst bereits ein optisch variables Erscheinungsbild verleihen. Derartige Dünnschichtelemente bestehen typischerweise aus einer Absorberschicht, einer dielektrischen Abstandsschicht und einer metallischen Reflektorschicht. Die Reflektorschicht wird dabei dünn genug ausgeführt, so dass sie durch die Laserstrahlung mit dem gewünschten Aussparungsbereich bzw. Mikrolöchern versehen werden kann.

In einer weiteren, ebenfalls vorteilhaften Erfindungsvariante sind die Aufzeichnungsschicht, die Maskenschicht oder beide Schichten semitransparent, bevorzugt jeweils mit einer Lichtdurchlässigkeit zwischen 20% und 90%, insbesondere zwischen 40% und 80%.

Die Erfindung umfasst weiter einen Datenträger, gemäß Anspruch 13, insbesondere ein Wertdokument, wie eine Banknote, einen Pass, eine Urkunde, eine Ausweiskarte oder dergleichen, der mit einem Sicherheitselement der beschriebenen Art ausgestattet ist. Das Sicherheitselement kann in einer vorteilhaften Erfindungsvariante insbesondere in oder über einem Fensterbereich oder einer durchgehenden Öffnung des Datenträgers angeordnet sein.

Die Erfindung enthält weiter ein Verfahren, gemäß Anspruch 15, zum Herstellen eines optisch variablen Sicherheitselements für Sicherheitspapiere, Wertdokumente und andere Datenträger, bei dem
- ein ein- oder mehrschichtiger Zentralkörper mit gegenüberliegenden ersten und zweiten Hauptflächen bereitgestellt wird, wobei auf der ersten Hauptfläche des Trägers eine Anordnung aus gleichartigen Mikrolinsen angeordnet wird, deren brechende Wirkung eine Fokusebene definiert,
- auf der zweiten Hauptfläche des Trägers eine lasersensitive Aufzeichnungsschicht angeordnet wird,
- zwischen der Anordnung aus Mikrolinsen und der lasersensitiven Aufzeichnungsschicht und außerhalb der Fokusebene der Mikrolinsen eine Maskenschicht angeordnet wird, und
- die Maskenschicht mit einem makroskopischen Aussparungsbereich ausgebildet oder versehen wird,
- in der lasersensitiven Aufzeichnungsschicht durch Einwirkung von Laserstrahlung, die durch den Aussparungsbereich der Maskenschicht hindurchtritt, eine Vielzahl von Mikrokennzeichen erzeugt wird, wobei jedes Mikrokennzeichen einer Mikrolinse zugeordnet wird und bei der Betrachtung des Sicherheitselements durch die zugeordnete Mikrolinse sichtbar ist,
- wobei durch diese Herstellungsschritte sichergestellt wird, dass der makroskopische Aussparungsbereich der Maskenschicht und die Vielzahl von Mikrokennzeichen im Passer zueinander angeordnet werden.

In einer bevorzugten Verfahrensvariante werden der makroskopische Aussparungsbereich in der Maskenschicht und die Mikrokennzeichen in der lasersensitiven Aufzeichnungsschicht im selben Arbeitsgang durch denselben Laserstrahl erzeugt.

In einer anderen, ebenfalls bevorzugten Verfahrensvariante wird die Maskenschicht mit dem Aussparungsbereich auf den Zentralkörper oder eine Teilschicht des Zentralkörpers aufgebracht, insbesondere aufgedruckt, um eine Belichtungsmaske zu erzeugen. Die Mikrokennzeichen in der lasersensitiven Aufzeichnungsschicht werden in einem nachfolgenden Arbeitsgang durch Beaufschlagung der Maskenschicht mit dem Aussparungsbereich mit Laserstrahlung erzeugt.

In beiden Verfahrensvariante erfolgt die Laserbeaufschlagung vorzugsweise mit Infrarotstrahlung, insbesondere eines Nd:YAG-, Nd:YVO₄- oder Faserlasers.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen optisch variablen Sicherheitselement, das über einer durchgehenden Öffnung der Banknote angeordnet ist,
- Fig. 2: schematisch den Schichtaufbau eines erfindungsgemäßen Sicherheitselements im Querschnitt,
- Fig. 3: in (a) und (b) zwei Zwischenschritte bei der Herstellung des Sicherheitselements der Fig. 2,
- Fig. 4: das visuelle Erscheinungsbild des Sicherheitselements der Fig. 2 bei Betrachtung von der Vorderseite her, in (a) im Auflicht und in (b) im Durchlicht,
- Fig. 5: das visuelle Erscheinungsbild des Sicherheitselements der Fig. 2 bei Betrachtung von der Rückseite her, in (a) im Auflicht und in (b) im Durchlicht,
- Fig. 6: schematisch den Schichtaufbau eines Sicherheitselements im Querschnitt, bei dem die Maskenschicht im Inneren des Zentralkörpers angeordnet ist,
- Fig. 7: schematisch den Schichtaufbau eines Sicherheitselements mit einer oberflächenvergrößernden Reliefstruktur für die Maskenschicht im Querschnitt,
- Fig. 8: schematisch den Schichtaufbau eines Sicherheitselements mit einer im Inneren des Zentralkörpers angeordneten Laserabsorptionsschicht im Querschnitt, und
- Fig. 9 und 10: schematisch den Schichtaufbau von Sicherheitselementen im Querschnitt, bei denen die Maskenschicht durch eine laserabsorbierende oder laserreflektierende Druckschicht gebildet ist.

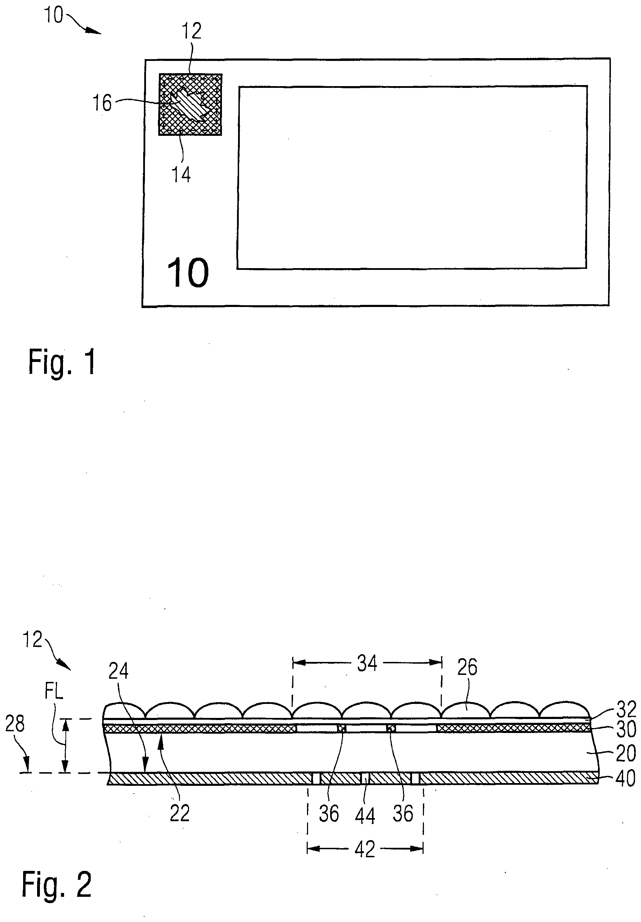

Die Erfindung wird nun am Beispiel von Sicherheitselementen für Banknoten erläutert. Figur 1 zeigt dazu eine schematische Darstellung einer Banknote 10 mit einem erfindungsgemäßen optisch variablen Sicherheitselement 12, das über einer durchgehenden Öffnung 14 der Banknote 10 angeordnet ist. Das Sicherheitselement 12 erscheint in Teilbereichen 16 im Durchlicht semitransparent und kann aufgrund seiner Aufbringung über der Öffnung 14 sowohl von seiner Vorderseite als auch von seiner Rückseite her jeweils im Auflicht als auch im Durchlicht betrachtet werden. Das Sicherheitselement 12 zeigt aus diesen unterschiedlichen Betrachtungsrichtungen jeweils unterschiedliche visuelle Erscheinungsbilder, wie nachfolgend genauer erläutert.

Figur 2 zeigt schematisch den Schichtaufbau des erfindungsgemäßen Sicherheitselements 12 im Querschnitt, wobei nur die für die Erläuterung des Funktionsprinzips erforderlichen Teile des Schichtaufbaus dargestellt sind. Das Sicherheitselement 12 enthält einen transparenten Zentralkörper 20, der beispielsweise durch eine transparente Kunststofffolie, wie etwa eine 27 µm dicke Polyethylenterephthalat(PET)-Folie gebildet ist. Der Zentralkörper 20 ist im gezeigten Ausführungsbeispiel einschichtig, kann jedoch auch zwei- oder mehrschichtig sein, wie weiter unten genauer erläutert.

Der Zentralkörper 20 weist gegenüberliegende erste und zweite Hauptflächen 22, 24 auf, wobei die erste Hauptfläche 22 mit einer Maskenschicht 30, einer auf der Maskenschicht 30 angeordneten Haftvermittlerschicht 32 und einer auf der Haftvermittlerschicht 32 vorliegenden Anordnung von gleichartigen Mikrolinsen 26 versehen ist. Im speziellen Ausführungsbeispiel sind die Mikrolinsen 26 regelmäßig in Form eines Mikrolinsenrasters angeordnet und bilden auf der Oberfläche der Trägerfolie ein zweidimensionales Bravais-Gitter mit einer vorgewählten Symmetrie. Das Bravais-Gitter der Mikrolinsen 26 kann beispielsweise eine hexagonale Gittersymmetrie oder auch eine niedrigere Symmetrie aufweisen, wie etwa die Symmetrie eines Parallelogramm-Gitters.

Die im Ausführungsbeispiel sphärisch ausgestalteten Mikrolinsen 26 weisen vorzugsweise einen Durchmesser zwischen 15 µm und 30 µm, beispielsweise von 20 µm auf und sind daher mit bloßem Auge nicht zu erkennen. Die Dicke des Zentralkörpers 20 und eventueller Zwischenschichten und die Krümmung der Mikrolinsen 26 sind so aufeinander abgestimmt, dass die Fokuslänge der gleichartigen Mikrolinsen 26 im Wesentlichen dem Abstand der Anordnung der Mikrolinsen von der zweiten Hauptfläche 24 des Zentralkörpers 20 entspricht. Da die Mikrolinsen 26 alle dieselbe Fokuslänge aufweisen und daher im Sinn der vorliegenden Beschreibung "gleichartig" sind, definiert die brechende Wirkung der Mikrolinsen 26 eine Fokusebene 28, die im Abstand einer Fokuslänge FL von der Anordnung der Mikrolinsen bzw. der Mikrolinsenebene und parallel zur Ebene der Mikrolinsen 26 liegt. Aufgrund der Abstimmung der Krümmung der Mikrolinsen 26 und der Dicke des Zentralkörpers 20 und eventuell vorhandener Zwischenschichten fällt die Fokusebene 28 in der Regel mit der zweiten Hauptfläche 24 des Zentralkörpers 20 zusammen, wie auch in Fig. 2 dargestellt.

Die zwischen der Anordnung der Mikrolinsen 26 und dem Zentralkörper 20 angeordnete Maskenschicht 30 besteht im Ausführungsbeispiel aus einer lasersensitiven Aluminiumschicht mit einer Dicke von 40 nm. Die Maskenschicht 30 liegt im Inneren des Sicherheitselements 12, jedoch weit außerhalb der Fokusebene 28 der Mikrolinsen 26.

Durch Einwirkung von Laserstrahlung wurde in der Maskenschicht 30 ein makroskopischer, also mit bloßem Auge sichtbarer Aussparungsbereich 34 erzeugt, der ein Motiv in Form von Mustern, Zeichen oder einer Codierung bildet. Der makroskopische Aussparungsbereich 34, der in der Regel Abmessungen von mehreren Millimetern aufweist, erstreckt sich dabei über mehrere tausend oder sogar mehrere zehntausend Mikrolinsen 26. Wie nachfolgend genauer erläutert, liegen in manchen Gestaltungen herstellungsbedingt innerhalb des Aussparungsbereichs 34 kleine Maskenstege 36 in den Bereichen zwischen benachbarten Mikrolinsen vor, deren Abmessungen jedoch weit unterhalb der Auflösungsgrenze des menschlichen Auges liegen und die für einen Betrachter daher nicht oder kaum in Erscheinung treten.

Das mit Bezug auf die Figuren 1 bis 5 beschriebene Sicherheitselement 12 zeigt zur Illustration einen makroskopischen Aussparungsbereich 34 mit der Form eines Ahornblatts 16 (Fig. 1). Der Aussparungsbereich 34 weist beispielsweise eine Fläche von 50 mm² auf, so dass er sich bei einem Linsendurchmesser von 20 µm über mehr als 100.000 Mikrolinsen erstreckt. Die Breite der Maskenstege 36 liegt dabei nur bei wenigen Mikrometern, so dass der Gesamteindruck des Aussparungsbereichs 34 von den Maskenstegen 36 nicht oder kaum beeinflusst wird.

Bei den genannten typischen Abmessungen versteht sich, dass die Größenverhältnisse von Mikrolinsen und Aussparungsbereichen in den Figuren nur schematisch dargestellt sind.

Auf der zweiten Hauptfläche 24 des Zentralkörpers 20 ist eine lasersensitive Aufzeichnungsschicht 40 angeordnet, die im Ausführungsbeispiel durch eine 60 nm dicke Kupferschicht gebildet ist.

In die Aufzeichnungsschicht 40 wurde durch Einwirkung von Laserstrahlung in einem Kennzeichnungsbereich 42 eine Vielzahl von kreisförmigen Mikrolöchern 44 mit einem Durchmesser von 2 µm. bis 3 µm eingebracht. Auch wenn die Erfindung nachfolgend mit Bezug auf Mikrolöcher näher erläutert wird, versteht sich, dass anstelle von Mikrolöchern auch andere Mikrokennzeichen, wie etwa farbveränderte Bereiche in einer Farbschicht zum Einsatz kommen können.

Der Aussparungsbereich 34 der Maskenschicht 30 und die auf der gegenüberliegenden Hauptfläche des Zentralkörpers 20 liegenden Mikrolöcher 44 werden in der nachfolgend genauer beschriebenen Weise im selben Arbeitsgang gleichzeitig und durch denselben Laserstrahl erzeugt, so dass der Aussparungsbereich 34 und die Mikrolöcher 44 zueinander keine Passertoleranzen aufweisen. Die Vielzahl der Mikrolöcher in der Aufzeichnungsschicht 40, beziehungsweise der diese Vielzahl an Mikrolöchern einschließende Kennzeichnungsbereich 42, steht dadurch im Passer zu dem Aussparungsbereich 34 der Maskenschicht 30. Insbesondere weicht die Lage des Kennzeichnungsbereichs 42 in der Ebene der Aufzeichnungsschicht 40 je nach der Richtung der Laserbeaufschlagung höchstens um einen halben Linsendurchmesser der Mikrolinsen 26 von der Lage des Aussparungsbereichs 34 in der Ebene der Maskenschicht 30 ab.

Das erfindungsgemäße Vorgehen gestattet daher einerseits eine hochgenaue Ausrichtung von Aussparungsbereich 34 und Kennzeichnungsbereich 42 bzw. Mikrolöchern 44 aufeinander. Andererseits bietet die erfindungsgemäße Anordnung der Maskenschicht 30 unterhalb der Mikrolinsenanordnung und damit im Inneren des Sicherheitselements den Vorteil, dass die Maskenschicht 30 ohne weitere Schutzmaßnahmen ausgezeichnet vor äußeren Einflüssen, wie Verschmutzung oder Abrieb, geschützt ist.

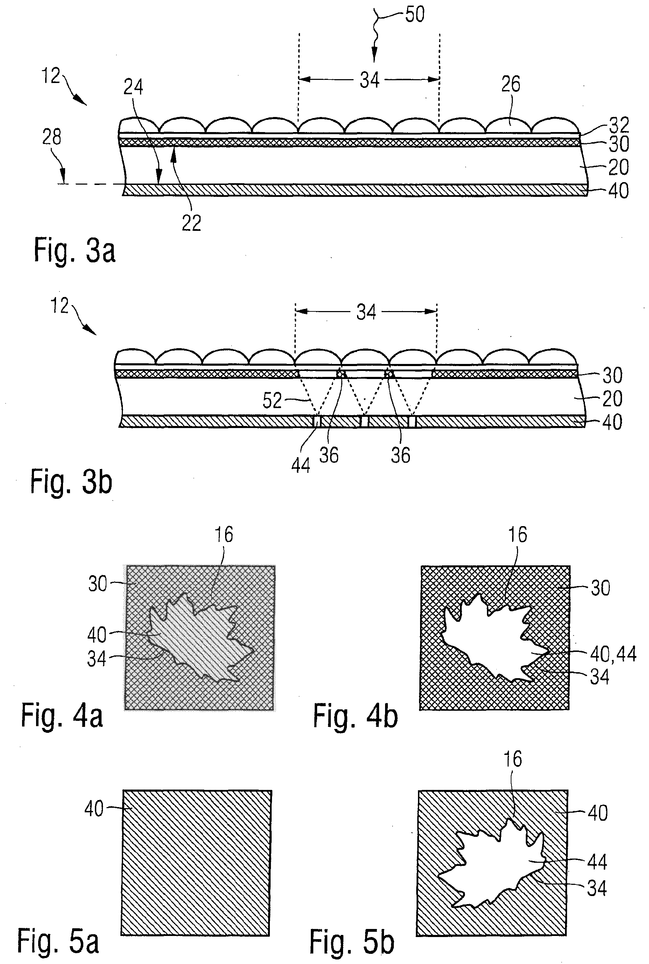

Mit Bezug auf Fig. 3(a) wird zur Herstellung des Sicherheitselements 12 zunächst eine den Zentralkörper 20 bildende PET-Folie auf ihrer ersten Hauptfläche 22 mit einer durchgehenden, 40 nm dicken Aluminiumschicht 30 beschichtet. Nach dem Aufbringen einer Haftvermittlerschicht 32 wird eine UV-Lackschicht aufgebracht und geprägt, um die Anordnung der Mikrolinsen 26 zu erzeugen. Wie oben erwähnt, ist die Krümmung der Mikrolinsen 26 so gewählt, dass die Fokuslänge der Mikrolinsen 26 im Wesentlichen der Dicke der Schichtenfolge aus Zentralkörpers 20, Maskenschicht 30 und Haftvermittlerschicht 32 entspricht. Die Fokusebene 28 der Mikrolinsen 26 liegt dann auf der zweiten Hauptfläche 24 des Zentralkörpers. Diese zweite Hauptfläche 24 wird mit einer durchgehenden, 60 nm dicken Kupferschicht 40 beschichtet. Bei den genannten Schichtdicken sind sowohl die Aluminiumschicht 30 als auch die Kupferschicht 40 opak. Die weit vor der Fokusebene 28 liegende opake Aluminiumbeschichtung 30 verhindert zunächst, dass Licht von den Mikrolinsen 26 auf die Aufzeichnungsschicht 40 fokussiert wird.

Der so vorbereitete und beschichtete Zentralköper 20 wird dann von der Seite der Mikrolinsen 16 bzw. der ersten Hauptfläche 22 her mit Laserstrahlung 50, beispielsweise mit der Infrarotstrahlung eines Nd:YAG-, Nd:YVO₄- oder Faserlasers beaufschlagt und die Aluminiumschicht 30 durch geeignete Führung des Laserstrahls in Form der gewünschten Aussparungsbereiche 34 abgetragen. Der Laserstrahl 50 kann dabei vorfokussiert sein. Durch die Abtragung der Aluminiumschicht 30 wird die lichtsperrende Wirkung der Maskenschicht 30 im Aussparungsbereich 34 aufgehoben und die Fokussierung der Mikrolinsen 26 auf die Aufzeichnungsschicht 40 wiederhergestellt.

Wird nun bei der Laserbeaufschlagung 50 eine Laserenergie verwendet, die höher ist, als die zur Demetallisierung der Aluminiumschicht 30 erforderliche Energie, so verbleibt nach der Abtragung noch eine Restenergie, die durch die Mikrolinsen 26 nunmehr unversperrt auf die Aufzeichnungsschicht 40 fokussiert wird, wie in Fig. 3(b) durch das Bezugszeichen 52 angedeutet. Bei geeigneter Wahl der Laserenergie ist die Restenergie nicht so hoch, dass die Aufzeichnungsschicht 40 unter den Mikrolinsen 26 vollständig abgetragen wird, reicht aber aus, um in der Aufzeichnungsschicht 40 Mikrolöcher 44 zu erzeugen, deren Abmessungen kleiner als die der zugehörigen Mikrolinsen 26 sind.

Durch diese Vorgehensweise wird erreicht, dass jedem der Mikrolöcher 44 eine Mikrolinse 26 zugeordnet ist, durch die das Mikroloch 44 bei Laserbeaufschlagung erzeugt wird, und durch die das Mikroloch 44 bei der späteren Betrachtung des Sicherheitselements sichtbar ist. Die Vielzahl der Mikrolöcher 44 bildet einen diese eng umschließenden Kennzeichnungsbereich 42, der aufgrund der gleichzeitigen Erzeugung durch denselben Laserstrahl im Passer zu dem Aussparungsbereich 34 der Maskenschicht 30 steht. Wegen der geringen Abmessungen der Mikrolinsen 26 von nur 20 µm ist sichergestellt, dass der Aussparungsbereich 34 aus dem normalen Betrachtungsabstand von 20 bis 30 cm deckungsgleich mit dem Kennzeichnungsbereich 42 der Vielzahl von Mikrolöchern 44 ist.

Aufgrund der fokussierenden Wirkung der Mikrolinsen 26 ist bei der Laserbeaufschlagung die lokale Laserenergie in der Maskenschicht 30 in Bereichen zwischen benachbarten Mikrolinsen wesentlich geringer als in den Bereichen, die direkt unterhalb der Mikrolinsen 26 liegen. Je nach verwendeter Laserenergie und Abstand der Maskenschicht 30 von der Mikrolinsenebene können daher innerhalb des Aussparungsbereichs 34 in den Bereichen zwischen benachbarten Mikrolinsen 26 kleine, nicht demetallisierte Maskenstege 36 verbleiben. Die Abmessungen der Maskenstege liegen aufgrund der geringen Größe und hohen Flächendeckung der Mikrolinsen jedoch weit unterhalb der Auflösungsgrenze des menschlichen Auges und sind für einen Betrachter daher als solche nicht oder kaum zu erkennen. Die Maskenstege 36 können allerdings vor allem bei schräger Betrachtung zu einer etwas reduzierten Transparenz des Sicherheitselements im Aussparungsbereich 34 führen, so dass für hochtransparente Aussparungsbereiche möglichst schmale oder sogar keine Maskenstege vorliegen sollten.

Figur 4 zeigt das visuelle Erscheinungsbild des so erzeugten Sicherheitselements 12 bei Betrachtung von der Seite der ersten Hauptfläche 22 (Vorderseite) her, wobei Fig. 4(a) des Erscheinungsbild im Auflicht, also in Reflexion, und Fig. 4(b) das Erscheinungsbild im Durchlicht, also in Transmission, zeigt.

Im Auflicht dominiert außerhalb des Aussparungsbereichs 34 die silbrig glänzende Maskenschicht 30 aus Aluminium das Erscheinungsbild. Im Aussparungsbereich 34 ist die Maskenschicht 30 bis auf eventuelle Maskenstege 36 vollständig entfernt und der Betrachter sieht dort die kupferne Farbe der Aufzeichnungsschicht 40. Die Mikrolöcher 44 in der Aufzeichnungsschicht 40 sind im Auflicht wegen ihrer geringen Größe mit bloßem Auge nicht oder nur schwer zu erkennen, so dass die Aufzeichnungsschicht 40 als durchgehende Metallschicht erscheint. Der Betrachter sieht somit im Auflicht ein kupferfarbenes Ahornblatt 16 vor einem silberfarbenen Hintergrund, wie in Fig. 4(a) illustriert.

Bei Betrachtung im Durchlicht erscheint das Sicherheitselement 12 außerhalb des Aussparungsbereichs 34 wegen der opaken Maskenschicht 30 dunkel. Im Inneren des Aussparungsbereichs 34 ist die Aufzeichnungsschicht 40 dagegen durch die Vielzahl der Mikrolöcher 44 blickrichtungsabhängig semitransparent. Da die Mikrolöcher 44 bei dieser Betrachtungsrichtung durch die Mikrolinsen 26 hindurch betrachtet werden, sind die Mikrolöcher 44 jeweils im Wesentlichen aus demjenigen Betrachtungswinkel zu erkennen, unter dem sie bei der Erzeugung mit dem Laserstrahl 50 eingebracht wurden. Um diesen zentralen Betrachtungswinkel herum sind die Mikrolöcher 44 darüber hinaus in einem gewissen Winkelbereich erkennbar, der hauptsächlich von dem Durchmesser der Mikrolöcher 44 abhängt. Dieser ergibt sich wiederum insbesondere aus den Linseneigenschaften, vor allem aus der Fokuslänge der Mikrolinsen 26 bei der Laserwellenlänge, der Dicke des Zentralkörpers 20 und eventueller Zwischenschichten zwischen Mikrolinsen und Aufzeichnungsschicht, der verwendeten Laserenergie und der Schichtdicke der Aufzeichnungsschicht 40. Durch geeignete Wahl und Abstimmung dieser Parameter lässt sich der Durchmesser der Mikrolöcher 44 und damit die Winkelausdehnung des Sichtbarkeitsbereichs in weitem Bereich nach Wunsch einstellen.

Mit Bezug auf die Darstellung der Fig. 4(b) wurden die Mikrolöcher 44 des beschriebenen Ausführungsbeispiels unter senkrechtem Einfall der Laserstrahlung 50 erzeugt, wie in Fig. 3 gezeigt. Die Mikrolöcher 44 sind daher auch bei senkrechter Betrachtung des Sicherheitselements 12 durch die Mikrolinsen 26 hindurch sichtbar, so dass der Aussparungsbereich 34 aus diesem Betrachtungswinkel im Durchlicht semitransparent erscheint. Der Betrachter sieht dann ein hell leuchtendes Ahornblatt 16 vor einem dunklen Hintergrund, wie in Fig. 4(b) illustriert.

Figur 5 zeigt das visuelle Erscheinungsbild des Sicherheitselements 12 bei Betrachtung von der Seite der zweiten Hauptfläche 24 (Rückseite) her, wobei Fig. 5(a) das Erscheinungsbild im Auflicht und Fig. 5(b) das Erscheinungsbild im Durchlicht illustriert.

Im Auflicht ist von der Rückseite her lediglich die kupferfarbene Aufzeichnungsschicht 40 zu sehen, da die Mikrolöcher 44 wegen ihrer geringen Größe im Auflicht mit bloßem Auge nicht oder nur schwer zu erkennen sind. Der Betrachter sieht somit im Auflicht von der Rückseite her die durchgehende kupferfarbene Metallschicht, wie in Fig. 5(a) gezeigt.

Bei Betrachtung im Durchlicht erscheint das Sicherheitselement 12 außerhalb des Aussparungsbereichs 34 wegen der opaken Aufzeichnungsschicht 40 dunkel. Im Inneren des Aussparungsbereichs 34 erscheint die Aufzeichnungsschicht 40 dagegen durch die Vielzahl der Mikrolöcher 44 in einem großen Winkelbereich semitransparent. Im Unterschied zur Betrachtung von der Vorderseite her werden bei der Rückseitenbetrachtung die Mikrolöcher 44 nicht durch Mikrolinsen 26 betrachtet. Vielmehr sammeln die Mikrolinsen 26 das von der ersten Hauptfläche 22 her einfallende Licht und fokussieren es auf die Mikrolöcher 44, so dass sich ein breiter Winkelbereich ergibt, unter dem Mikrolöcher 44 auf der Rückseite hell erscheinen. Der Betrachter sieht somit ein hell leuchtendes Ahornblatt 16 vor einem dunklen Hintergrund, wie in Fig. 5(b) illustriert.

Bei dem eben beschriebenen Ausführungsbeispiel wurden der einfacheren Darstellung halber die Mikrolöcher lediglich aus einer einzigen Richtung, nämlich aus einer Richtung senkrecht auf die Hauptflächen 22, 24, in die Aufzeichnungsschicht eingebracht. In anderen Gestaltungen können Mikrolöcher oder allgemein Mikrokennzeichen aber auch aus zwei oder mehr unterschiedlichen Richtungen durch die Anordnung der Mikrolinsen 26 hindurch in der Aufzeichnungsschicht 40 erzeugt werden und die erzeugten Mikrolöcher oder Mikrokennzeichen sind dann bei der späteren Betrachtung aus den entsprechenden Betrachtungsrichtungen sichtbar.

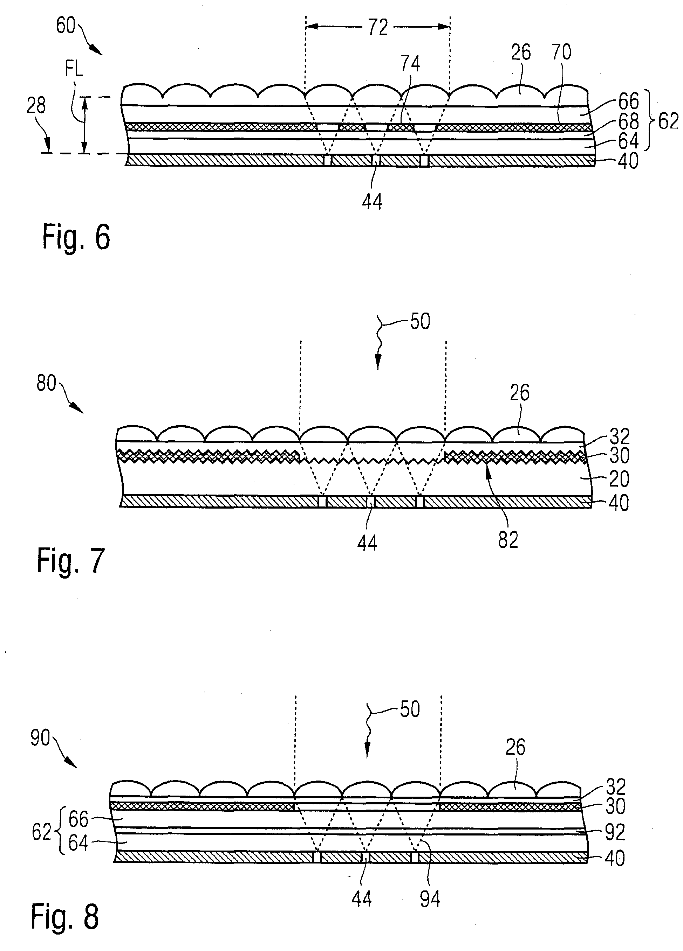

Die Maskenschicht muss nicht auf der ersten Hauptfläche des Zentralkörpers angeordnet sein, sondern kann auch im Inneren des Zentralkörpers vorliegen, wie im Ausführungsbeispiel der Fig. 6 illustriert. Das dort gezeigte Sicherheitselement 60 enthält einen mehrschichtigen Zentralkörper 62, der zwei transparente, 15 µm bzw. 12 µm dicke PET-Folien 64, 66 und eine transparente Kaschierlackschicht 68 umfasst. Eine erste Hauptfläche 22 des Zentralkörpers 62 ist wie bei dem Ausführungsbeispiel der Fig. 2 mit einer Anordnung gleichartiger Mikrolinsen 26 versehen, auf der zweiten Hauptfläche 24 ist eine lasersensitive Aufzeichnungsschicht 40 in Form einer 60 nm dicken Chromschicht vorgesehen. Die Krümmung der Mikrolinsen 26 ist wiederum so auf die Dicke des Zentralkörpers 62 abgestellt, dass die Fokusebene 28 der Mikrolinsen 26 mit der zweiten Hauptfläche 24 und damit im Wesentlichen auch mit der Ebene der Aufzeichnungsschicht 40 zusammenfällt.

Die lasersensitive Maskenschicht 70 ist bei diesem Ausführungsbeispiel zwischen den beiden Folien 64, 66 des Zentralkörpers 62 angeordnet, so dass der Abstand der Maskenschicht 70 von der Fokusebene 28 bei etwa 50% bis 60% der Fokuslänge FL der Mikrolinsen liegt.

Analog zu der bei Fig. 3 beschrieben Vorgehensweise wurde in die Maskenschicht 70 durch Einwirkung von Laserstrahlung ein makroskopischer Aussparungsbereich 72 in Form eines gewünschten Motivs erzeugt, wobei auch hier innerhalb des Aussparungsbereichs 72 kleine Maskenstege 74 zwischen benachbarten Mikrolinsen mit Abmessungen deutlich unterhalb der Auflösungsgrenze des menschlichen Auges verbleiben können. Die Laserenergie bei der Laserbeaufschlagung wurde so gewählt, dass nach der Erzeugung des Aussparungsbereichs 72 in der Maskenschicht 70 noch eine Restenergie verbleibt, die nach Fokussierung durch die Mikrolinsen 26 zur Erzeugung der Mikrolöcher 44 in der Aufzeichnungsschicht 40 ausreicht. Der so entstehende Kennzeichnungsbereich 42 mit der Vielzahl an Mikrolöchern steht durch die gleichzeitige Erzeugung durch denselben Laserstrahl im Passer mit dem Aussparungsbereich 72 der Maskenschicht 70, wie bei Fig. 3 beschrieben.

Um bei der Laserbeaufschlagung die Erzeugung des Aussparungsbereichs in der Maskenschicht zu erleichtern und damit insbesondere das Verbleiben von Maskenstegen zu reduzieren oder vollständig zu unterdrücken, kann das Sicherheitselement ablationsfördernde Strukturen, beispielsweise eine oberflächenvergrößernde Reliefstruktur für die Maskenschicht aufweisen. Beim Aufdampfen einer Metallschicht auf unterschiedlich grobe Reliefstrukturen ergibt sich nämlich grundsätzlich eine umso dünnere Metallschicht, je gröber das Relief ausgebildet ist. Darüber hinaus wird einfallende Laserstrahlung bei einer gröberen Strukturierung im Allgemeinen öfter reflektiert und gibt daher mehr Energie an die Metallisierung ab, so dass insgesamt gröbere Reliefstrukturen bereits mit geringerer Laserenergie demetallisiert werden können.

Mit Bezug auf Fig. 7 entspricht das dort gezeigte Sicherheitselement 80 weitgehend dem Sicherheitselement 12 der Fig. 2, wobei allerdings die erste Hauptfläche 22 des Zentralkörpers 20 vor dem Aufbringen der Maskenschicht 30 aus Aluminium mit einer oberflächenvergrößernden Reliefstruktur 82 versehen wurde. Die oberflächenvergrößernde Reliefstruktur 82 kann beispielsweise in die Oberfläche einer Folie eingeprägt sein oder kann in einer aufgebrachten und geprägten Prägelackschicht vorliegen. Wie in Fig. 7 dargestellt, setzt sich die oberflächenvergrößernde Reliefstruktur 82 in die nur 40 nm dicke Aluminiumschicht 30 fort.

Die zweite Hauptfläche 24 des Zentralkörpers 20 wird dagegen ohne Reliefstruktur flach ausgebildet. Aufgrund der oberflächenvergrößernden Strukturierung der Maskenschicht 30 ist diese mit geringerer Laserenergie ablatierbar, während für die Aufzeichnungsschicht 40 keine ablationsfördernden Maßnahmen ergriffen wurden. Die Laserbeaufschlagung 50 kann daher mit einer Laserenergie erfolgen, welche ausreicht, um die Maskenschicht 30 auch in den Bereichen zwischen den Mikrolinsen 26 abzutragen, ohne dabei zu große Mikrolöcher 44 in der schwerer zu ablatierenden Aufzeichnungsschicht 40 zu erzeugen oder die Aufzeichnungsschicht 40 ganz abzutragen.

Gemäß einer hier nicht gezeigten Ausgestaltung kann die erste Hauptfläche 22 des Zentralkörpers 20 vor dem Aufbringen der Maskenschicht 30 nur in dem Aussparungsbereich mit der oberflächenvergrößernden Reliefstruktur 82 versehen sein, die in diesem Fall als Maske dient. Dies hat den Vorteil, dass die Laserbeaufschlagung nicht in Form des gewünschten Aussparungsbereichs erfolgen muss, da der Aussparungsbereich bereits durch die oberflächenvergrößernde Reliefstruktur 82 vorgegeben ist.

Bei einer weiteren Erfindungsvariante, die anhand des Sicherheitselements 90 der Fig. 8 erläutert ist, ist zwischen der Maskenschicht 30 und der Aufzeichnungsschicht 40 im Inneren des Zentralkörpers 62 eine im sichtbaren Spektralbereich transparente Laserabsorptionsschicht 92 angeordnet. Bei der Laserbeaufschlagung 50 mit einem Infrarotlaser, beispielsweise des oben genannten Nd:YAG-Lasers einer Wellenlänge von 1,064 µm, absorbiert die Laserabsorptionsschicht 92 einen Teil der einfallenden Laserenergie, so dass die Aufzeichnungsschicht 40 nur noch mit reduzierter Laserenergie 94 beaufschlagt wird. Dadurch kann die Laserbeaufschlagung 50 mit einer Laserenergie erfolgen, die ausreicht um die Maskenschicht 30 auch in den Bereichen zwischen den Mikrolinsen 26 abzutragen, ohne dabei zu große Mikrolöcher 44 in der Aufzeichnungsschicht 40 zu erzeugen oder die Aufzeichnungsschicht 40 ganz abzutragen.

Die Laserabsorptionsschicht 92 weist im sichtbaren Spektralbereich vorzugsweise eine Transmission von mehr als 90% oder sogar mehr als 95% auf und beeinträchtigt das visuelle Erscheinungsbild des Sicherheitselements daher nicht. Die Laserabsorptionsschicht 92 kann beispielsweise durch eine mit einem Infrarotabsorber versetzte, im sichtbaren Spektralbereich transparente Lackschicht gebildet sein. Der Zentralkörper 62 kann auch durch zwei transparente Folien 64, 66 gebildet sein, die mit einem im Sichtbaren transparenten und mit Infrarotabsorber versetzten Kaschierkleber zusammenlaminiert sind, so dass der Kaschierkleber als Laserabsorptionsschicht 92 wirkt. Zusätzlich oder alternativ kann auch die transparente Folie 64 als Laserabsorptionsschicht ausgebildet sein und dazu beispielsweise einen Infrarotabsorber enthalten.

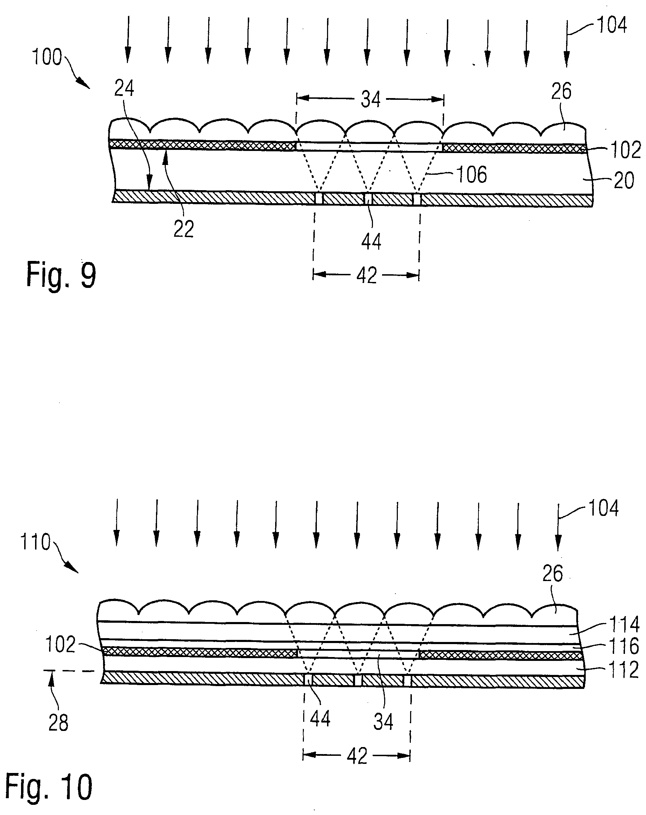

Figur 9 zeigt ein Sicherheitselement 100 nach einem anderen Ausführungsbeispiel der Erfindung, bei dem die auf die erste Hauptfläche 22 des Zentralkörpers 20 aufgebrachte Maskenschicht 102 durch eine laserabsorbierende oder laserreflektierende Druckschicht gebildet ist. Die Maskenschicht 102 wird dazu in Form einer dünnen Farbschicht, beispielsweise einer dünnen Deckweißschicht in Form des gewünschten Motivs mit einem makroskopischen Aussparungsbereich 34 auf die erste Hauptfläche 22 aufgedruckt. Nach dem Aufdrucken der Maskenschicht 102 wird eine UV-Lackschicht aufgebracht und geprägt, um die Anordnung der Mikrolinsen 26 zu erzeugen. Die zweite Hauptfläche 24 des Zentralkörpers wird mit einer Aufzeichnungsschicht 40, beispielsweise aus Kupfer oder Chrom versehen, wie oben beschrieben.

In dem Aussparungsbereich 34 ist die Maskenschicht 102 für die Laserstrahlung 104 der nachfolgenden Laserbeaufschlagung zur Erzeugung der Mikrolöcher 44 durchlässig. Innerhalb des Aussparungsbereichs 34 wird die einfallende Laserstrahlung daher auf die Aufzeichnungsschicht 40 fokussiert, wie durch das Bezugszeichen 106 angedeutet, und erzeugt dort die gewünschten Mikrolöcher 44. Außerhalb des Aussparungsbereichs 34 wird die einfallende Laserstrahlung dagegen absorbiert oder reflektiert, so dass dort keine Mikrolöcher in der Aufzeichnungsschicht 40 erzeugt werden. Die Maskenschicht 102 ist selbst mit Vorteil nicht lasersensitiv und wird bei den verwendeten Laserenergien daher von der Laserstrahlung 106 nicht verändert.

Bei dieser Vorgehensweise erfolgen die Strukturierung der Maskenschicht und die Erzeugung der Mikrolöcher nicht ein einem, sondern in zwei getrennten Arbeitsschritten. Dafür ergibt sich der Vorteil, dass die Laserbeaufschlagung 106 nicht in Form des gewünschten Aussparungsbereichs 34 erfolgen muss, da der Aussparungsbereich 34 bereits durch die aufgedruckte Maskenschicht 102 vorgegeben ist. Bei dieser Ausgestaltung verbleiben prinzipbedingt keine Maskenstege in den Bereichen zwischen den Mikrolinsen 26. Bei der nachfolgenden Laserbeaufschlagung wirkt die Maskenschicht 102 als Belichtungsmaske, so dass Mikrolöcher 44 nur in dem Aussparungsbereich 34 der Maskenschicht 102 erzeugt werden. Auch hier stehen daher der Aussparungsbereich 34 und die Vielzahl der Mikrolöcher 44, bzw. der diese einschließende Kennzeichnungsbereich 42, im Passer zueinander. Zudem ist die Maskenschicht 102 durch ihre Anordnung im Inneren des Sicherheitselements 100 vor äußeren Einflüssen, wie Verschmutzung oder Abrieb gut geschützt.

Eine laserabsorbierende oder laserreflektierende Druckschicht als Maskenschicht 102 kann auch relativ nahe an der Fokusebene der Mikrolinsen 26 angeordnet sein. Mit Bezug auf das Sicherheitselement 110 der Fig. 10 kann beispielsweise eine Maskenschicht 102 mit einem Aussparungsbereich 34 auf eine dünne erste Folie 112 aufgedruckt werden. Die beschichtete erste Folie 112 wird dann mit einem Kaschierkleber 116 mit einer dickeren zweiten Folie 114 zusammenlaminiert, so dass die Maskenschicht 102 zwischen den beiden Folien zu liegen kommt. Anschließend werden die Hauptflächen des so entstandenen Zentralkörpers 20 in der oben beschriebenen Weise mit einer Anordnung aus Mikrolinsen 26 und einer Aufzeichnungsschicht 40 versehen. Bei der Beaufschlagung mit Laserstrahlung 104 wirkt die Maskenschicht 102 als Belichtungsmaske, so dass Mikrolöcher 44 nur in dem Aussparungsbereich 34 der Maskenschicht 102 erzeugt werden. Der Aussparungsbereich 34 und die Vielzahl der Mikrolöcher 44, bzw. der diese einschließende Kennzeichnungsbereich 42, stehen daher im Passer zueinander, zudem ist die Maskenschicht 102 durch ihre Anordnung im Inneren des Sicherheitselements 110 vor äußeren Einflüssen, wie Verschmutzung oder Abrieb gut geschützt. Der Abstand der Maskenschicht 102 von der Fokusebene 28 liegt bei diesem Ausführungsbeispiel bei etwa 15% bis 30% der Fokuslänge FL der Mikrolinsen.

### Bezugszeichenliste

- 10: Banknote
- 12: Sicherheitselement
- 14: Öffnung
- 16: Teilbereiche
- 20: Zentralkörper
- 22,24: Hauptflächen
- 26: Mikrolinsen
- 28: Fokusebene
- 30: Maskenschicht
- 32: Haftvermittlerschicht
- 34: Aussparungsbereich
- 36: Maskenstege
- 40: Aufzeichnungsschicht
- 42: Kennzeichnungsbereich
- 44: Mikrolöcher
- 50: Laserstrahlung
- 52: fokussierte Laserstrahlung
- 60: Sicherheitselement
- 62: Zentralkörper
- 64,66: Folien
- 68: Kaschierlackschicht
- 70: Maskenschicht
- 72: Aussparungsbereich
- 74: Maskenstege
- 80: Sicherheitselement
- 82: oberflächenvergrößernde Reliefstruktur
- 90: Sicherheitselement
- 92: Laserabsorptionsschicht
- 94: Laserstrahlung reduzierter Laserenergie
- 100: Sicherheitselement
- 102: Maskenschicht
- 104: Laserstrahlung
- 106: fokussierte Laserstrahlung
- 110: Sicherheitselement
- 112, 114: erste und zweite Folie
- 116: Kaschierkleber

## Patentansprüche

1. Optisch variables Sicherheitselement (12) für Sicherheitspapiere, Wertdokumente und andere Datenträger, mit
- einem ein- oder mehrschichtigen Zentralkörper (20) mit gegenüberliegenden ersten und zweiten Hauptflächen (22, 24),
- einer auf der ersten Hauptfläche (22) des Zentralkörpers (20) angeordneten Anordnung aus gleichartigen Mikrolinsen (26), deren brechende Wirkung eine Fokusebene (28) definiert,
- einer auf der zweiten Hauptfläche (24) des Zentralkörpers (20) angeordneten lasersensitiven Aufzeichnungsschicht (40),
- einer Maskenschicht (30), die zwischen der Anordnung aus Mikrolinsen (26) und der lasersensitiven Aufzeichnungsschicht (40) und außerhalb der Fokusebene (28) der Mikrolinsen angeordnet ist, und
- einer Vielzahl von in der lasersensitiven Aufzeichnungsschicht (40) durch Einwirkung von Laserstrahlung erzeugten Mikrokennzeichen (44), wobei jedes Mikrokennzeichen (44) einer Mikrolinse (26) zugeordnet ist und bei der Betrachtung des Sicherheitselements durch die zugeordnete Mikrolinse sichtbar ist,
- wobei die Maskenschicht (30) einen makroskopischen Aussparungsbereich (34) aufweist, der im Passer zu der Vielzahl von Mikrokennzeichen (44) steht.

2. Sicherheitselement nach Anspruch 1, **dadurch gekennzeichnet, dass** die Maskenschicht eine lasersensitive Maskenschicht ist, bei der der Aussparungsbereich durch Einwirkung von Laserstrahlung erzeugt ist.

3. Sicherheitselement nach Anspruch 1, **dadurch gekennzeichnet, dass** die Maskenschicht eine laserabsorbierende oder laserreflektierende Maskenschicht ist, die vorzugsweise eine Druckschicht darstellt.

4. Sicherheitselement nach wenigstens einem der Ansprüche 1 bis 3, **dadurch gekennzeichnet, dass** die Maskenschicht auf der ersten Hauptfläche des Zentralkörpers zwischen dem Zentralkörper und der Anordnung aus Mikrolinsen angeordnet ist, oder dass der Zentralköper aus zwei oder mehr Teilschichten besteht und die Maskenschicht zwischen zwei Teilschichten des Zentralkörpers angeordnet ist.

5. Sicherheitselement nach wenigstens einem der Ansprüche 1 bis 4, **dadurch gekennzeichnet, dass** sich der Aussparungsbereich der Maskenschicht durchgehend über mehrere Mikrolinsen, bevorzugt über mehrere hundert Mikrolinsen, besonders bevorzugt über mehrere tausend Mikrolinsen erstreckt, oder dass sich der Aussparungsbereich der Maskenschicht über mehrere Mikrolinsen, bevorzugt über mehrere hundert Mikrolinsen, besonders bevorzugt über mehrere tausend Mikrolinsen erstreckt, wobei zwischen benachbarten Mikrolinsen Maskenstege vorliegen, deren Abmessungen unterhalb der Auflösungsgrenze des menschlichen Auges liegen.

6. Sicherheitselement nach wenigstens einem der Ansprüche 1 bis 5, **dadurch gekennzeichnet, dass** der Abstand benachbarter Mikrokennzeichen gleich dem Abstand der den benachbarten Mikrokennzeichen zugeordneten Mikrolinsen ist.

7. Sicherheitselement nach wenigstens einem der Ansprüche 1 bis 6, **dadurch gekennzeichnet, dass** der Abstand der Fokusebene von der Mikrolinsenebene eine Fokuslänge definiert und der Abstand der Maskenschicht von der Fokusebene zwischen 40% und 100% der Fokuslänge liegt und insbesondere mehr als 80% der Fokuslänge beträgt.

8. Sicherheitselement nach wenigstens einem der Ansprüche 1 bis 7, **dadurch gekennzeichnet, dass** die Maskenschicht eine oberflächenvergrößernde Reliefstruktur aufweist.

9. Sicherheitselement nach wenigstens einem der Ansprüche 1 bis 8, **dadurch gekennzeichnet, dass** zwischen der Maskenschicht und der Aufzeichnungsschicht eine Laserabsorptionsschicht angeordnet ist, die vorzugsweise im sichtbaren Spektralbereich eine Transmission von mehr als 90% oder sogar von mehr als 95% aufweist, und/oder die im infraroten Spektralbereich eine Absorption von mehr als 20% oder sogar von mehr als 30% aufweist.

10. Sicherheitselement nach wenigstens einem der Ansprüche 1 bis 9, **dadurch gekennzeichnet, dass** die Mikrokennzeichen durch Mikrolöcher in der Aufzeichnungsschicht gebildet sind, insbesondere durch im Wesentlichen kreisförmige Mikrolöcher oder durch musterförmige Mikrolöcher.

11. Sicherheitselement nach wenigstens einem der Ansprüche 1 bis 10, **dadurch gekennzeichnet, dass** die Mikrokennzeichen jeweils kleiner als die zugeordneten Mikrolinsen sind, vorzugsweise dass das Flächenverhältnis von Mikrokennzeichen und zugeordneten Mikrolinsen unterhalb von 1,0 oder unterhalb von 0,5 oder sogar unterhalb von 0,2 liegt.

12. Sicherheitselement nach wenigstens einem der Ansprüche 1 bis 11, **dadurch gekennzeichnet, dass** die Mikrokennzeichen aus zumindest zwei unterschiedlichen Richtungen mit Laserstrahlung durch die Anordnung der Mikrolinsen hindurch in die Aufzeichnungsschicht eingebracht sind und bei der Betrachtung jeweils aus diesen zumindest zwei unterschiedlichen Richtungen erkennbar sind.

13. Datenträger mit einem Sicherheitselement nach wenigstens einem der Ansprüche 1 bis 12.

14. Datenträger nach Anspruch 13, **dadurch gekennzeichnet, dass** das Sicherheitselement in oder über einem Fensterbereich oder einer durchgehenden Öffnung des Datenträgers angeordnet ist.

15. Verfahren zum Herstellen eines optisch variablen Sicherheitselements (12) für Sicherheitspapiere, Wertdokumente und andere Datenträger, bei dem
- ein ein- oder mehrschichtiger Zentralkörper (20) mit gegenüberliegenden ersten und zweiten Hauptflächen (22, 24) bereitgestellt wird, wobei auf der ersten Hauptfläche (22) des Trägers eine Anordnung aus gleichartigen Mikrolinsen (26) angeordnet wird, deren brechende Wirkung eine Fokusebene (28) definiert,
- auf der zweiten Hauptfläche (24) des Trägers eine lasersensitive Aufzeichnungsschicht (40) angeordnet wird,
- zwischen der Anordnung aus Mikrolinsen (26) und der lasersensitiven Aufzeichnungsschicht (40) und außerhalb der Fokusebene (28) der Mikrolinsen eine Maskenschicht (30) angeordnet wird, und
- die Maskenschicht (30) mit einem makroskopischen Aussparungsbereich (34) ausgebildet oder versehen wird,
- in der lasersensitiven Aufzeichnungsschicht (40) durch Einwirkung von Laserstrahlung, die durch den Aussparungsbereich (34) der Maskenschicht (30) hindurchtritt, eine Vielzahl von Mikrokennzeichen (44) erzeugt wird, wobei jedes Mikrokennzeichen (44) einer Mikrolinse (26) zugeordnet wird und bei der Betrachtung des Sicherheitselements durch die zugeordnete Mikrolinse sichtbar ist,
- wobei durch diese Herstellungsschritte sichergestellt wird, dass der makroskopische Aussparungsbereich (34) der Maskenschicht (30) und die Vielzahl von Mikrokennzeichen (44) im Passer zueinander angeordnet werden.

16. Verfahren nach Anspruch 15, **dadurch gekennzeichnet, dass** der makroskopische Aussparungsbereich in der Maskenschicht und die Mikrokennzeichen in der lasersensitiven Aufzeichnungsschicht im selben Arbeitsgang durch denselben Laserstrahl erzeugt werden, oder dass die Maskenschicht mit dem Aussparungsbereich auf den Zentralkörper oder eine Teilschicht des Zentralkörpers aufgebracht, insbesondere aufgedruckt wird, um eine Belichtungsmaske zu erzeugen, und dass die Mikrokennzeichen in der lasersensitiven Aufzeichnungsschicht in einem nachfolgenden Arbeitsgang durch Beaufschlagung der Maskenschicht mit dem Aussparungsbereich mit Laserstrahlung erzeugt werden.

## Claims

1. An optically variable security element (12) for security papers, value documents and other data carriers, having
- a single or multilayer central body (20) having opposing first and second main surfaces (22, 24),
- an arrangement, arranged on the first main surface (22) of the central body (20), of microlenses (26) of the same kind whose refractive effect defines a focal plane (28),
- a laser-sensitive recording layer (40) arranged on the second main surface (24) of the central body (20),
- a mask layer (30) that is arranged between the arrangement of microlenses (26) and the laser-sensitive recording layer (40) and outside of the focal plane of (28) the microlenses, and
- a plurality of micromarks (44) produced in the laser-sensitive recording layer (40) by the action of laser radiation, each micromark (44) being associated with a microlens (26) and being visible when the security element is viewed through the associated microlens,
- the mask layer (30) comprising a macroscopic gap region (34) that is in register with the plurality of micromarks (44).

2. The security element according to claim 1, **characterized in that** the mask layer is a laser-sensitive mask layer in which the gap region is produced by the action of laser radiation.

3. The security element according to claim 1, **characterized in that** the mask layer is a laser-absorbing or laser-reflecting mask layer that preferably constitutes a printing layer.

4. The security element according to at least one of claims 1 to 3, **characterized in that** the mask layer is arranged on the first main surface of the central body between the central body and the arrangement of microlenses, or that the central body consists of two or more sub-layers and the mask layer is arranged between two sub-layers of the central body.

5. The security element according to at least one of claims 1 to 4, **characterized in that** the gap region of the mask layer extends continuously across multiple microlenses, preferably across several hundred microlenses, particularly preferably across several thousand microlenses, or that the gap region of the mask layer extends across multiple microlenses, preferably across several hundred microlenses, particularly preferably across several thousand microlenses, there being present between adjacent microlenses mask partitions whose dimensions lie below the resolution limit of the human eye.

6. The security element according to at least one of claims 1 to 5, **characterized in that** the distance between adjacent micromarks is equal to the distance between the microlenses associated with the adjacent micromarks.

7. The security element according to at least one of claims 1 to 6, **characterized in that** the distance of the focal plane from the microlens plane defines a focal length, and the distance of the mask layer from the focal plane lies between 40% and 100% of the focal length and is especially more than 80% of the focal length.

8. The security element according to at least one of claims 1 to 7, **characterized in that** the mask layer comprises a surface-enlarging relief pattern.

9. The security element according to at least one of claims 1 to 8, **characterized in that** between the mask layer and the recording layer is arranged a laser-absorption layer that, in the visible spectral range, preferably has a transmission of more than 90% or even of more than 95%, and/or that, in the infrared spectral range, has an absorption of more than 20% or even of more than 30%.

10. The security element according to at least one of claims 1 to 9, **characterized in that** the micromarks are formed by microholes in the recording layer, especially by substantially circular microholes or by pattern-shaped microholes.

11. The security element according to at least one of claims 1 to 10, **characterized in that** the micromarks are each smaller than the associated microlenses, preferably **in that** the area ratio of micromarks and associated microlenses lies below 1.0 or below 0.5 or even below 0.2.

12. The security element according to at least one of claims 1 to 11, **characterized in that** the micromarks are introduced through the arrangement of microlenses into the recording layer from at least two different directions with laser radiation, and are perceptible when viewed from a respective one of said at least two different directions.

13. A data carrier having a security element according to at least one of claims 1 to 12.

14. The data carrier according to claim 13, **characterized in that** the security element is arranged in or over a window region or a through opening in the data carrier.

15. A method for manufacturing an optically variable security element (12) for security papers, value documents and other data carriers, in which
- a single or multilayer central body (20) having opposing first and second main surfaces (22, 24) is provided, there being arranged on the first main surface (22) of the substrate an arrangement of microlenses (26) of the same kind whose refractive effect defines a focal plane (28),
- a laser-sensitive recording layer (40) is arranged on the second main surface (24) of the substrate,
- a mask layer (30) is arranged between the arrangement of microlenses (26) and the laser-sensitive recording layer (40) and outside of the focal plane (28) of the microlenses, and
- the mask layer (30) is developed having, or is provided with, a macroscopic gap region (34),
- a plurality of micromarks (44) is produced in the laser-sensitive recording layer (40) by the action of laser radiation that passes through the gap region (34) of the mask layer (30), each micromark (44) being associated with a microlens (26) and being visible when the security element is viewed through the associated microlens,
- it being ensured through these manufacturing steps that the macroscopic gap region (34) of the mask layer (30) and the plurality of micromarks (44) are arranged in register with each other.

16. The method according to claim 15, **characterized in that** the macroscopic gap region in the mask layer and the micromarks in the laser-sensitive recording layer are produced in the same operation by the same laser beam, or that the mask layer having the gap region is applied to, especially is imprinted on, the central body or a sub-layer of the central body to produce an exposure mask, and **in that** the micromarks in the laser-sensitive recording layer are produced in a subsequent operation by impinging on the mask layer having the gap region with laser radiation.

## Revendications

1. Élément de sécurité optiquement variable (12) pour papiers de sécurité, documents de valeurs et autres supports de données, comportant
- un corps central (20) à une ou plusieurs couches doté de première et seconde surfaces principales (22,24) opposées,
- un dispositif disposé sur la première surface principale (22) du corps central (20) et composé de microlentilles de même type (26) dont l'effet de réfraction définit un plan focal (28),
- une couche d'enregistrement (40) sensible au laser disposée sur la seconde surface principale (24) du corps central (20),
- une couche de masquage (30) qui est disposée entre le dispositif composé de microlentilles (26) et la couche d'enregistrement sensible au laser (40) et à l'extérieur du plan focal (28) des microlentilles, et
- une multitude de micromarquages (44) générés dans la couche d'enregistrement sensible au laser (40) par l'action de rayonnement laser, chaque micromarquage (44) étant associé à une microlentille (26) et étant lisible en cas d'observation de l'élément de sécurité à travers la microlentille associée,
- la couche de masquage (30) présentant une zone d'évidement macroscopique (34) qui se trouve dans le passeur vers la multitude de micromarquages (44).

2. Élément de sécurité selon la revendication 1, **caractérisé en ce que** la couche de masquage est une couche de masquage sensible au laser dans laquelle la zone d'évidement est générée par action de rayonnement laser.

3. Élément de sécurité selon la revendication 1, **caractérisé en ce que** la couche de masquage est une couche de masquage absorbant le laser ou réfléchissant le laser et qui constitue de préférence une couche d'impression.

4. Élément de sécurité selon au moins une des revendications 1 à 3, **caractérisé en ce que** la couche de masquage disposée sur la première surface principale du corps central entre le corps central et le dispositif composé de microlentilles, ou que le corps central est composé de deux sous-couches ou plus et que la couche de masquage est disposée entre deux sous-couches du corps central.

5. Élément de sécurité selon au moins une des revendications 1 à 4, **caractérisé en ce que** la zone d'évidement de la couche de masquage s'étend en continu sur plusieurs microlentilles, de préférence sur plusieurs centaines de microlentilles, très préférentiellement sur plusieurs milliers de microlentilles, ou que la zone d'évidement de la couche de masquage s'étend sur plusieurs microlentilles, de préférence sur plusieurs centaines de microlentilles, très préférentiellement sur plusieurs milliers de microlentilles, les traverses de masquage dont les dimensions sont inférieures à la limite de définition de l'œil humain se trouvant entre des microlentilles voisines.

6. Élément de sécurité selon au moins une des revendications 1 à 5, **caractérisé en ce que** la distance entre des micromarquages voisins est égale à la distance entre les microlentilles associées au micromarquage voisin.

7. Élément de sécurité selon au moins une des revendications 1 à 6, **caractérisé en ce que** la distance entre le plan focal et le plan des microlentilles définit une longueur focale et que la distance entre la couche de masquage et le plan focal représente 40 % à 100 % de la longueur focale et s'élève en particulier à plus de 80 % de la longueur focale.

8. Élément de sécurité selon au moins une des revendications 1 à 7, **caractérisé en ce que** la couche de masquage présente une structure en relief agrandissant la surface.

9. Élément de sécurité selon au moins une des revendications 1 à 8, **caractérisé en ce que**, entre la couche de masquage et la couche d'enregistrement, est disposée une couche d'absorption de laser qui présente de préférence dans la plage spectrale visible une transmission de plus de 90 % ou même de plus de 95 %, et/ou qui présente dans la plage spectrale infrarouge une absorption de plus de 20 % ou même de plus de 30 %.

10. Élément de sécurité selon au moins une des revendications 1 à 9, **caractérisé en ce que** les micromarquages sont constitués par des microtrous dans la couche d'enregistrement, en particulier par des microtrous sensiblement de forme circulaire ou par des microtrous en forme de motifs.

11. Élément de sécurité selon au moins une des revendications 1 à 10, **caractérisé en ce que** les micromarquages sont respectivement plus petits que les microlentilles associées, que le rapport de surface entre les micromarquages et les microlentilles associées se situe de préférence en dessous de 1,0 ou en-dessous de 0,5 ou même en dessous de 0,2.

12. Élément de sécurité selon au moins une des revendications 1 à 11, **caractérisé en ce que** les micromarquages sont pratiqués depuis au moins deux directions différentes avec un rayonnement laser par le dispositif de microlentilles travers la couche d'enregistrement et que deux directions différentes sont détectables en cas d'observation respectivement depuis celles-ci.

13. Support de données comportant un élément de sécurité selon au moins une des revendications 1 à 12.

14. Support de données selon la revendication 13, **caractérisé en ce que** l'élément de sécurité est disposé dans ou sur une zone de fenêtre ou un orifice traversant du support de données.

15. Procédé de fabrication d'un élément de sécurité optiquement variable (12) pour papiers de sécurité, documents de valeurs et autres supports de données, dans lequel
- un corps central (20) à une ou plusieurs couches doté de première et seconde surfaces principales (22,24) opposées est mis à disposition, étant disposé sur la première surface principale (22) du support un dispositif composé de microlentilles de même type (26) dont l'effet de réfraction définit un plan focal (28),
- une couche d'enregistrement (40) sensible au laser est disposée sur la seconde surface principale (24) du support,
- une couche de masquage (30) est disposée entre le dispositif composé de microlentilles (26) et la couche d'enregistrement sensible au laser (40) et à l'extérieur du plan focal (28) des microlentilles, et
- la couche de masquage (30) est réalisée avec ou pourvue d'une zone d'évidement macroscopique (34),
- dans la couche d'enregistrement sensible au laser (40), par l'action de rayonnement laser qui passe à travers la zone d'évidement (34) de la couche de masquage (30), une multitude de micromarquages (44) sont générés, chaque micromarquage (44) étant associé à une microlentille (26) et étant visible en cas d'observation de l'élément de sécurité à travers la microlentille associée,
- ces étapes de fabrication permettant de s'assurer que la zone d'évidement macroscopique (34) de la couche de masquage (30) et la multitude de micromarquages (44) sont associés les uns aux autres dans le passeur.

16. Procédé selon la revendication 15, **caractérisé en ce que** la zone d'évidement macroscopique est générée dans la couche de masquage et les micromarquages dans la couche d'enregistrement sensible au laser pendant la même opération par le même rayon laser, ou que la couche de masquage est appliquée, en particulier imprimée, avec la zone d'évidement sur le corps central ou une sous-couche du corps central, pour générer un masque d'exposition, et que les micromarquages sont générés dans la couche d'enregistrement sensible au laser dans une opération suivante par sollicitation de la couche de masquage avec la zone d'évidement avec du rayonnement laser.
